# EUROPEAN PATENT APPLICATION

(11) **EP 1 308 453 A2**
(43) Date of publication of application: **07.05.2003**
(21) Application number: 03000861.9
(22) Date of filing: 18.10.1996
(51) Int. Cl.: C07F 15/00

(54) **Process of preparing platinum compound**

(30) Priority: 10.04.1996 JP 8695496
(62) Divisional of application: 96830537.5
(71) Applicant: DEBIOPHARM S.A., 1000 Lausanne 9 (CH)
(72) Inventor: Taniuchi, Jun-ichi, Tanaka Kikinzoku Kogyo K. K., Tokyo (JP); Nakanishi, Chihiro, Tanaka Kikinzoku Kogyo K. K., Tokyo (JP); Ohnishi, Yuko, Tanaka Kikinzoku Kogyo K. K., Tokyo (JP)
(74) Representative: Pellegri, Alberto

(57) **Abstract**

Disclosed herein are processes of preparing a platinum complex having a Formula II. For preventing the contamination of impurities, reaction environment is so controlled that oxidation is difficult to occur.

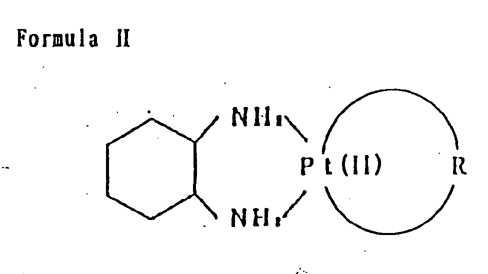

## Description

### Background of the Invention

The present invention relates to a process of preparing a cis- Pt (II) complex of a 1,2-cyclohexanediamine isomer having formula II, as described here under, useful as raw material of a carcinostatic substance, especially to a process of preparing cis-oxalato(trans-ℓ-1,2-cyclohexanediamine) Pt(II) at a high yield with producing substantially no by-products.

The components of formula I and II are as follow: 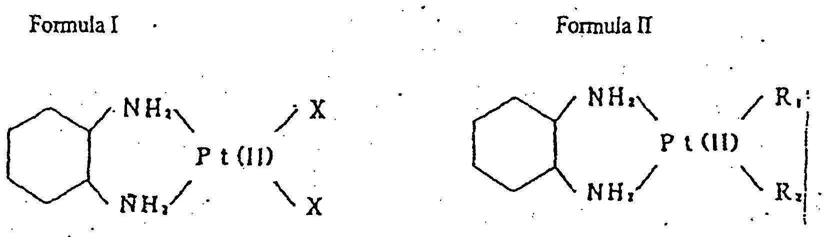 R1 and R2 forming a semicircular ring having the following formulae III, IV, V, VI, VII or VIII

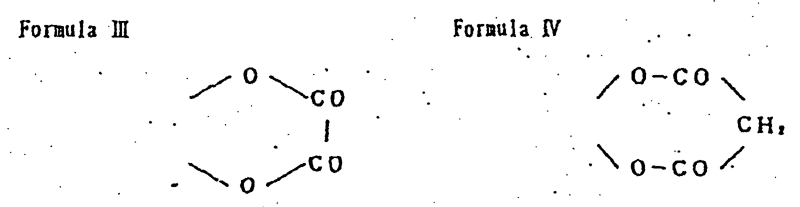

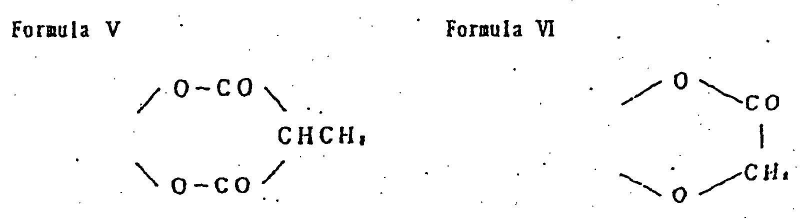

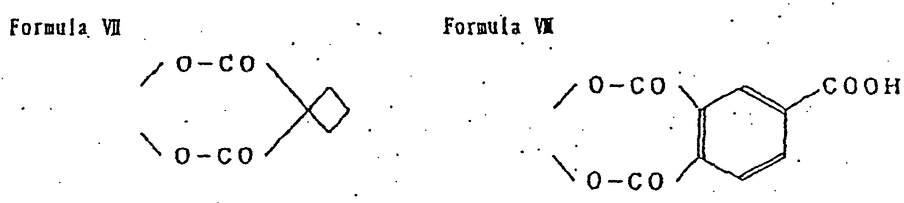

Cis-oxalato(trans-ℓ-1,2-cyclohexanediamine) Pt(II) (hereinafter also referred to as oxalato complex") having Formula II (the steric configuration of 1,2-cyclohexanediamine is trans-ℓ, and R having Formula III) is obtained by converting trans-ℓ-1,2-cyclohexanediamine into cis-dichloro(trans-ℓ-1,2-cyclohexanediamine) Pt(II) through a reaction with potassium tetrachloroplatinate (II), reacting the dichloro complex with silver nitrate to 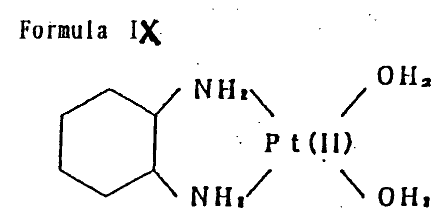 obtain cis-diaquo(trans-ℓ-1,2-cyclohexanediamine) Pt(II) (hereinafter also referred to as "diaquo complex) having Formula IX (the steric configuration of 1,2-cyclohexanediaiaine is trans-ℓ), and then adding oxalic acid thereto.

While a high purity product with a small amount of by-products can be obtained when the reaction between the diaquo complex and the oxalic acid is completed in such a short period of time as two hours in the above process of preparation, its Yield is disadvantageously lowered to 50 to 60 %. Although, on the other hand, the yield may be elevated to about 70 % when the reaction time is extended to about 24 hours, an amount of by-products or impurities produced during the reaction process increases with the reaction time so that the desired oxalato complex is contaminated with the impurities to lower its purity.

Medicines such as a carcinostatic substance are required to have a high purity. When they are contaminated with even a slight amount of impurities, not only activities of the medicines are lowered to the extent of the contaminated impurities but also further decrease of the activities may be invited by the impurities and, at worst, the impurities possess a toxic character so that the administration to a patient may produce an adverse effect.

Since not only the labor and cost of the separation and removal of impurities are large and high but also part of the desired product may be lost during the above separation and removal if a final product is contaminated with the impurities, it is most desirable to maintain the contamination of the impurities into the desired product at minimum.

Accordingly, the formation of impurities is depressed by shortening a reaction time sacrificing the elevation of a yield. However, it is naturally desirable to intend the elevation of the yield without the contamination with the impurities.

On the other hand, platinum compounds having Formulae I (the steric configuration of 1,2-cyclohexanediamine is cis, trans-d, or trans-ℓ, and X is Cl or Br) and II (the steric configuration of 1,2-cyclohexanediamine is cis, trans-d, or trans-ℓ, and R₁ and R₂ form a semicircular ring having Formulae III, IV, V, VI, VII and VIII) are known to have a carcinostatic effect, and the compound II may be prepared by adding two molar equivalents of a silver ion solution to a cis-Pt(II) complex dihalogen compound of a 1,2-cyclohexanediamine isomer having the Formula I, removing silver chloride or silver bromide produced by means of filtration, adding NaI or KI and active carbon to the filtrate, completely removing, by means of filtration, the unreacted complex of the Formula I, by-products of the complex of Formula I and the unreacted silver ion which have been converted into their iodo compounds, and adding an organic dibasic acid to the filtrate (Japanese patent laid open No.5-194332).

One of the most important subjects in performing process management and technology management on the mass production of the above preparation is stringent management of a liquid volume which has been discussed in relation with workability and reliability. It is required that a reliable, efficient and high yield process in which excess and shortage of supply of a liquid to a reaction due to an unavoidable error in the proper liquid volume management especially in the mass production do not occur is established.

For example in the above process, when a slight excess of two molar equivalents of a silver ion solution (silver nitrate) is eventually added, especially no problem arises because NaI and KI are removed by filtration in the next step. When, on the other hand, a slight deficiency of the silver is added, a cis-Pt(II) complex dihalogen compound of 1,2-cyclohexanediamine isomer (Formula II) is left and may have an adverse effect on the original medicine.

In the compound having the Formula II prepared in accordance with the above process, about 0.1 to 0.5 % of a dihydroxo Pt(IV) complex having a Formula XII is contained as an impurity. This complex is produced by means of oxidation of the target complex having the Formula II.

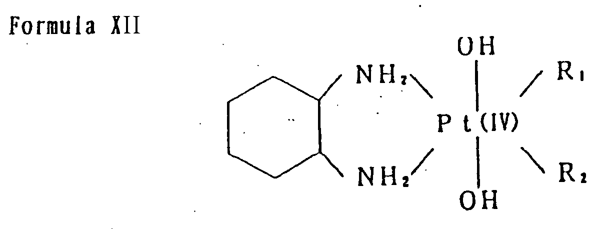

The contamination of the impurity having the Formula XII in the product having the Formula II must be avoided.

### Summary of the Invention

In view of the above drawbacks, an object of the present invention is to provide a process of preparing a cis-Pt(II) complex of a 1,2-cyclohexanediamine isomer containing substantially no dihydroxo Pt(IV) complex as an impurity.

The aspect of the present invention is a process of preparing a cis-Pt(II) complex of a 1,2-cyclo-hexadiamine isomer having a Formula II (the steric configuration of 1,2-cyclohexanediamine is cis, trans-d or trans-ℓ, and R₁ and R₂ form a semicircular ring having Formulae III, IV, V, VI, VII and VIII) characterized in that: procedures from charging of raw material potassium or sodium chloroplatinate and trans-(-)-1,2-cyclohexanediamine to obtainment of the Pt(II) complex of the 1,2-cyclo-hexadiamine isomer are performed in a condition containing less than 5 % of oxygen, or in nitrogen, or in vacuum or in an inert gas atmosphere, and all water employed is deoxidation water.

In accordance with the aspect of the present invention, a Pt(II) complex of 1,2-cyclohexanediamine isomer containing, as an impurity, no 1,2-cyclohexanediamine dihydroxo Pt(IV) complex having psychological activities can be prepared so that the obtained complex may be employed as raw material for a carcinostatic agent having a high purity and high stability.

### Detailed Description of the Invention

In the aspect of the present invention, the characteristic feature is that all the procedures from the charging of the raw material to the production of the target cis-Pt(II) complex of the 1,2-cyclohexanediamine isomer are conducted in conditions containing less than 5 % of oxygen, in nitrogen or under vacuum or in an inert gas, and all water employed is deoxidation water.

In this aspect, oxidation is prevented so that a cis-Pt(II) complex of 1,2-cyclohexanediamine isomer containing, as an impurity, no dihydroxo Pt(IV) complex can be prepared.

### Examples

Although Examples of the present invention will be described, these Examples are not construed to restrict the present invention.

### Example 1

After 562.5 g of potassium tetrachloroplatinate and 154.8 g of trans-(-)-1,2-cyclohexanediamine were dissolved in 3.5 ℓ of deoxidation water and mixed, cake-like cis-dichloro(trans-(-)-1,2-cyclohexanediamine) Pt(II) was obtained without recrystallization at a yield of 96 %. This was suspended in 5.7 ℓ of deoxidation water to which was added 2.8 ℓ of deoxidation water in which 386.4 g of silver nitrate was dissolved. After the stirring in dark for three days at room temperature, most of the precipitate of silver chloride produced was removed by means of filtration. After this filtrate was concentrated under vacuum, a solution which was prepared by dissolving 3.85 g of KI into 45 ml of deoxidation water was added and stirred for one hour, and then active carbon was added. Silver iodide and a compound of Formula I, iodo derivatives of compounds of Formulae XIII and IX and active carbon were completely removed by filtration. To the residual filtrate was added 146.3 g of oxalic acid which was left standing for two hours. The crude crystal of the target cis-oxalato(trans-(-)-1,2-cyclohexanediamine) Pt(II) was obtained at a yield of 50 %. Then, after 270 g of this crude crystal was dissolved in 12 ℓ of deoxidation water under heating followed by filtration, it was cooled to room temperature. The precipitated white crystal was collected by filtration and washed with a small amount of deoxidation water. After the drying of the obtained crystal. 160 g of the target platinum complex was obtained.

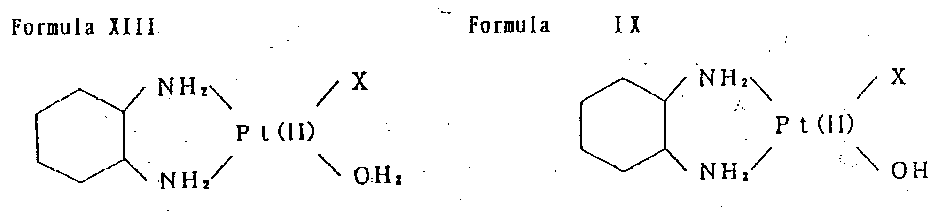

### Comparative Example 1

The procedures were the same as that of Example 1, but all the procedures were carried out in atmospheric air and water employed was ordinary water dissolving oxygen. Eventually, 50 g of the target platinum complex was obtained.

Purity tests of the cis-oxalato(trans-(-)-1,2-cyclohexanediamine) Pt(II) prepared in Example 1 and Comparative Example 1 were conducted employing the high speed liquid chromatography (HPLC) method. In this HPLC method, the length of an ODS column was 20 to 50 cm, a mobile phase was one or mixed liquid selected from water, acetonitril and a buffer solution, and a flow rate of an elute was 0.1 to 5 ml/min.

As a result of this purity test in accordance with the HPLC method, 1.2 % of dihydroxo Pt(IV) complex was detected in the cis-oxalato (traps-(-)-1,2-cyclohexanediamine) Pt(II) prepared in Comparative Example 1. while no dihydroxo Pt(IV) complex was detected in the cis-oxalato(trans-(-)- 1,2-cyclohexanediamine) Pt(II) prepared in Example 1, and it was determined that the platinum complex prepared in Example 1 did not contain the dihydroxo Pt(IV) complex.

## Claims

1. A process of preparing a cis-Pt(II) complex of a 1,2-cyclohexanediamine isomer having a Formula II (the steric configuration of 1,2-cyclohexanediamine is cis, trans-d or trans-ℓ, and R₁ and R₂ form a semicircular ring having Formulae III, IV, V, VI, VII and VIII) **characterized in that**:
procedures from charging of raw material potassium or sodium tetrachloroplatinate and traps-(-)-1,2-cyclohexanediamine to obtainment of the Pt(II) complex of the 1,2-cyclo-hexanediamine isomer are performed in a condition containing below 5 % of oxygen, or in nitrogen, or in vacuum or in an Inert gas atmosphere, and all water employed Is deoxidation water.
